# FASCICULE DE BREVET EUROPEEN

(11) **EP 3 806 995 B1**
(45) Date de publication et mention de la délivrance du brevet: **07.09.2022**
(21) Numéro de dépôt: 19737859.9
(22) Date de dépôt: 13.06.2019
(51) Int. Cl.: B01J 19/00, B01J 19/18, B01J 3/00

(54) **RÉACTEUR POUR LE TRAITEMENT PAR OXYDATION HYDROTHERMALE D'UNE MATIÈRE ORGANIQUE DANS UN MILIEU RÉACTIONNEL**
REAKTOR ZUR HYDROTHERMALEN OXIDATIONSBEHANDLUNG EINES ORGANISCHEN STOFFES IN EINEM REAKTIONSMEDIUM
REACTOR FOR THE HYDROTHERMAL OXIDATION TREATMENT OF AN ORGANIC MATERIAL IN A REACTION MEDIUM

(30) Priorité: 14.06.2018 FR 1855247
(43) Date de publication de la demande: 21.04.2021
(73) Titulaire: COMMISSARIAT À L'ÉNERGIE ATOMIQUE ET AUX ÉNERGIES ALTERNATIVES, 75015 Paris (FR)
(72) Inventeur: RUIZ, Jean-Christophe, 30290 LAUDUN L'ARDOISE (FR); TURC, Hubert-Alexandre, 30133 LES ANGLES (FR); LEYBROS, Antoine, 30200 BAGNOLS SUR CEZE (FR)
(74) Mandataire: Brevalex
(86) Numéro de dépôt international: PCT/FR2019/051425
(87) Numéro de publication internationale: WO 2019/239069

(56) Documents cités:
- EP-A2- 0 708 058
- WO-A1-02/30836
- WO-A1-93/02969
- WO-A2-2013/034632

## Description

### DOMAINE TECHNIQUE

Le domaine de l'invention est celui du traitement par oxydation hydrothermale ou par voie humide d'une matière organique.

L'invention trouve notamment application à la destruction de matières organiques telles que des déchets industriels dangereux liquides tels que, par exemple, des solvants halogénés, des effluents organiques toxiques, des effluents pharmaceutiques, biologiques ou contaminés, et/ou de déchets industriels dangereux solides (par exemple des Résines Echangeuses d'Ions (REI)).

### ÉTAT DE LA TECHNIQUE ANTÉRIEURE

Un exemple d'art antérieur est le réacteur pour le traitement par oxydation hydrothermale d'une matière organique de WO02/30836 , comprenant une enceinte dans laquelle est logé un organe de confinement définissant une zone de confinement pour un milieu réactionnel, et une zone périphérique ; un système de refroidissement et un système de chauffage dans deux portions successives de la zone périphérique pour le fluide oxydant, avant son introduction dans la zone de confinement ; un canal d'introduction de la matière organique dans la zone de confinement, muni d'une embouchure pour introduire le fluide chargé dans le canal d'introduction ; un deuxième système de refroidissement pour le fluide chargé le long du canal d'introduction. L'Oxydation HydroThermale (OHT) et l'Oxydation par Voie Humide (OVH) permettent, au moyen d'eau pressurisée et en température, et en présence d'un oxydant, la décomposition totale ou partielle de matières organiques (comme par exemple des effluents organiques halogénés ou non, de fort Pouvoir Calorifique Inférieur (PCI) ou non). L'oxydant peut être de l'air, de l'oxygène pur, sous forme gazeuse ou bien liquide, comme par exemple de l'eau oxygénée (peroxyde d'hydrogène) ou de l'acide nitrique.

Dans le cas de l'OHT, le mélange de l'oxydant et de l'eau, solubilisant la matière organique, s'effectue dans une enceinte sous pression (également appelée autoclave) maintenue à une température située entre 400 et 550°C et à une pression supérieure à la pression critique de l'eau (i.e. 221 bar), formant alors un mélange homogène monophasique. C'est dans ces conditions que la matière organique est oxydée. Dans le cas de l'OVH, l'enceinte est maintenue à une température inférieure à la température critique de l'eau (i.e. 374°C), et à une pression inférieure à la pression critique de l'eau (i.e. 221 bars).

La technique de l'oxydation en milieu supercritique a tout d'abord été mise en œuvre au sein d'une enceinte ayant une simple géométrie tubulaire. Cette géométrie s'est avérée efficace du point de vue réactionnel, mais très limitée lors du traitement de composés halogénés en raison de phénomènes de corrosion se produisant au niveau des parois, ainsi que du dépôt de composés minéraux provoquant la formation de bouchons.

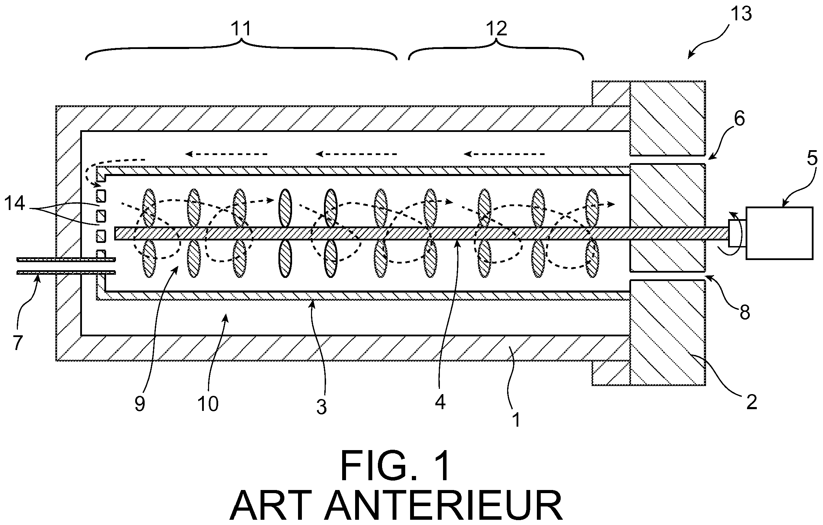

Pour résoudre ces problèmes de corrosion et d'accumulation des sels, il a été proposé (documents **[1], [2]** et **[3])** l'utilisation d'un réacteur continu d'oxydation hydrothermale à double enveloppe agité, illustré dans la figure 1.

Le réacteur 13 comporte une enceinte 1 de forme tubulaire, résistant à la pression et à la température opératoires, qui est fermée par une bride d'étanchéité 2 maintenue froide par un refroidissement actif. L'enceinte 1 du réacteur présente deux zones bien distinctes, à savoir une zone maintenue à température opératoire 11 (zone chaude) par des moyens de chauffage indépendants et une zone maintenue froide 12 (zone froide) par des moyens de refroidissement indépendants.

Un tube de confinement 3 est situé à l'intérieur de l'enceinte 1 et est maintenu étanche par un simple joint torique au contact de la bride froide 2. Ce tube de confinement 3 délimite une zone réactionnelle 9, située à l'intérieur du tube, et une zone annulaire 10, comprise entre l'extrados du tube et la paroi interne de l'enceinte 1. Le tube de confinement 3 met en communication fluidique, du côté de la zone chaude (température opératoire), la zone réactionnelle 9 avec la zone annulaire 10 par le biais d'au moins une ouverture 14.

Le tube de confinement 3 n'est pas soumis à une contrainte mécanique de pression et confine la réaction d'OHT ou d'OVH dans la zone réactionnelle 9. Ce confinement se fait à la fois de manière statique, du fait de la présence du tube de confinement qui forme un écran pour la zone réactionnelle 9, et de manière dynamique, du fait de la circulation des fluides au cours du fonctionnement du réacteur. Ce tube de confinement 3 est conçu pour résister aux agressions chimiques induites par la réaction et peut être facilement remplacé par le démontage de la bride froide 2. Ce tube de confinement fait également fonction d'échangeur de chaleur à contre-courant entre les réactifs à préchauffer (oxydant + eau) et les fluides chauds (effluents) issus de la zone réactionnelle. Ainsi, les réactifs nécessaires à la réaction d'OHT ou d'OVH (oxydant + eau) sont alimentés au débit opératoire via la bride froide 2 et circulent dans la zone annulaire 10 jusqu'à l'extrémité chaude de l'enceinte du réacteur, pour ensuite pénétrer dans la zone réactionnelle 9. A cet endroit, les réactifs (oxydant + eau) rencontrent les matières organiques qui sont injectées au débit opératoire au niveau d'une alimentation tubulaire simple 7 située à l'extrémité chaude de l'enceinte du réacteur. La matière traitée (effluents) sort de la zone réactionnelle par une sortie 8.

Un système d'agitation 4 équivalent à une turbine, comprenant un arbre muni de pales, est situé dans le tube de confinement. L'arbre est mis en rotation par une motorisation électrique externe 5. Le système d'agitation 4 permet d'homogénéiser le milieu réactionnel et facilite les transferts thermiques entre la zone réactionnelle 9 et la paroi du tube de confinement 3. Le système d'agitation 4, tout comme le tube de confinement 3, sont réalisés dans un matériau résistant aux agressions chimiques induites par la réaction et aux gradients de températures axiaux le long de l'enceinte du réacteur. Ce système d'agitation peut être aisément remplacé en démontant la bride froide 2.

Il y a également des moyens de chauffage et des moyens de refroidissement réalisés :
- à l'extérieur de l'enceinte 1 du réacteur et à pression atmosphérique, par le biais de résistances chauffantes (par exemple, des colliers chauffants) ou de doubles enveloppes de circulation d'eau glacée (documents **[1]** et **[2])** ;
- à l'intérieur de l'enceinte 1 du réacteur, à la pression opératoire, par le biais de résistances ou de circuits de fluides caloporteurs immergés dans la zone annulaire et suffisamment proches de la zone réactionnelle 9, tout en étant protégés des agressions par le tube de confinement 3 (document **[3]).**

Ces réacteurs de l'art antérieur peuvent toutefois encore être améliorés. Ces réacteurs présentent notamment les limitations suivantes.

L'utilisation d'un tube de confinement 3 implique la présence d'une zone annulaire 10 en équipression avec la zone réactionnelle 9. Cette configuration permet de délimiter un volume protégé des agressions chimiques induites par la réaction d'OHT ou d'OVH. Ce volume est parcouru par un fluide composé d'eau et d'oxydant, que nous appellerons « fluide oxydant », qui est réchauffé par échange de chaleur avec le fluide issu de la réaction d'une part (situé en intrados du tube de confinement), et par les moyens de chauffage indépendants d'autre part (résistances chauffantes extérieures au tube de confinement 3 ou à l'enceinte 1 du réacteur). Dans les documents **[1], [2]** et **[3],** le fluide oxydant est utilisé comme un fluide caloporteur, qui permet un transfert de chaleur depuis l'extrados du tube de confinement vers la surface d'un échangeur de chaleur plongé dans la zone annulaire ou vers la surface de la paroi de l'enceinte du réacteur.

L'écoulement de ce fluide oxydant s'effectue à un débit d'alimentation requis par les besoins de la réaction d'OHT ou d'OVH, ce qui peut conduire , dans les cas rencontrés expérimentalement, à un écoulement très faiblement turbulent, voire laminaire. D'autre part, si dans les conditions de températures supercritiques de l'eau, celle-ci et l'oxydant éventuellement gazeux, tel que l'air ou le dioxygène, forment un mélange homogène, il n'en est pas de même dans les conditions de températures sous critiques rencontrées dans la zone froide du réacteur. Il n'est donc pas exclu qu'une séparation des phases liquide et gazeuse ait lieu dans la zone annulaire à basse température, conduisant à une stratification de l'écoulement, la phase aqueuse se plaçant en partie inférieure et la phase gazeuse en partie supérieure. Une telle stratification serait néfaste à l'homogénéité des transferts de chaleur et pourrait même conduire à des dégradations de l'équipement du fait de l'absence locale d'eau ; par exemple, en cas de chauffe d'une double enveloppe en titane sous pression d'air mais en l'absence d'eau, l'oxydation du titane peut conduire à un comportement pyrophorique. Il serait donc souhaitable de pouvoir agir sur le régime de l'écoulement dans la zone annulaire 10, indépendamment du débit d'alimentation 6 requis par la réaction.

Par ailleurs, des essais expérimentaux de longue durée ont permis de mettre en évidence une faiblesse d'étanchéité au niveau de la connectique, sous pression et température, de l'alimentation en matière organique à décomposer 7 (déchet froid). A la contrainte mécanique s'ajoutent, sur cette connectique, des cycles de température lors des phases de démarrage et de mise à l'arrêt du réacteur. Il est donc nécessaire, si l'on veut conserver une bonne étanchéité au cours du temps, de changer cette connectique régulièrement.

En outre, les débits d'alimentation en déchet froid étant relativement faibles par rapport aux autres flux entrant et sortant de l'enceinte 1, cette alimentation 7 est généralement réalisée avec une tubulure de diamètre très faible. Or, l'oxydant n'étant généralement pas présent dans cette tubulure, cette dernière est sujette au colmatage par pyrolyse du déchet.

Le concept du réacteur continu à double enveloppe (enceinte et tube de confinement) agité a été largement utilisé pour diverses applications en continu ou en semi-continu d'OVH et d'OHT. Certaines applications impliquant des composés comportant des hétéroatomes tels que S, P, Cl peuvent occasionner, dans des conditions de fonctionnement de longue durée, des dommages significatifs pour le tube de confinement 3 et le système d'agitation 4, et plus particulièrement sur une région localisée sur l'arbre du système d'agitation, située dans une zone dite de transition supercritique/sous-critique. Les efforts de flexion subis par le système d'agitation sont en outre importants dans cette région particulière. Cette région de l'arbre fait donc l'objet d'une combinaison d'effets mécaniques, thermohydrauliques, voire thermogalvaniques, qui s'ajoutent aux phénomènes de corrosion généralisée classique et de corrosion sous dépôts. Cette combinaison induit une faiblesse du système d'agitation, qui peut conduire à des maintenances plus fréquentes dans certaines conditions opératoires.

Des essais expérimentaux ont permis de mettre en évidence une faiblesse concernant l'absence de moyens de contrôle de surchauffe et des transferts thermiques tout le long du réacteur, malgré l'existence de forts dégagements de puissance thermique le long de l'enceinte de ce réacteur, du fait du déroulement rapide de la réaction d'oxydation des composés organiques dans l'eau supercritique. Dans les réacteurs de l'art antérieur, on peut réaliser une mesure de température dans la zone annulaire 10 au droit de l'injection du déchet organique. Cependant, cette mesure de température permet seulement de gérer un flux complémentaire froid d'eau ou de mélange eau/oxydant afin d'éviter la pyrolyse dans la ligne d'injection plongeant dans le milieu réactionnel, dans le cas d'un traitement par OHT de solvants à fort PCI. Ce type de mesure conduit à la réalisation de connections HP chaudes sur l'enceinte du réacteur, que nous proposons d'éviter avec la présente invention.

### EXPOSÉ DE L'INVENTION

L'invention vise à améliorer un réacteur continu à double enveloppe agité de l'art antérieur, notamment en permettant une meilleure maîtrise des conditions de réaction dans le cœur du réacteur, indépendamment du débit d'alimentation en eau (milieu réactionnel) et oxydants froids (air, oxygène pur, etc.).

Pour cela, l'invention vise notamment à améliorer l'efficacité des transferts thermiques (chauffe et refroidissement) en agissant sur la circulation forcée du fluide oxydant, qui est utilisé comme caloporteur, ainsi que sur les moyens de contrôle de la puissance dégagée par la réaction, les moyens de chauffage et de suivi de température. L'invention vise également à améliorer l'efficacité des transferts thermiques (chauffe et refroidissement) en agissant sur l'introduction des déchets dans la zone réactionnelle.

Ainsi, l'invention concerne un réacteur pour le traitement par oxydation hydrothermale d'une matière organique dans un milieu réactionnel (qui peut être un milieu supercritique), le réacteur comprenant :
- une enceinte délimitant une cavité dans laquelle est logé un organe de confinement définissant une zone, intérieure, dite de confinement, destinée à contenir le milieu réactionnel, et une zone, extérieure, dite périphérique ;
- au moins une entrée de fluide oxydant pour introduire un fluide oxydant dans la zone périphérique ;
- au moins un premier système de refroidissement configuré pour refroidir le fluide oxydant au niveau de l'entrée de fluide oxydant dans une première portion de la zone périphérique, de manière à définir une zone périphérique froide ;
- au moins un système de chauffage pour chauffer le fluide oxydant dans une deuxième portion de la zone périphérique, avant son introduction dans la zone de confinement, de manière à définir une zone périphérique chaude ; et
- au moins un canal d'introduction de la matière organique dans la zone de confinement pour introduire un fluide chargé, comprenant la matière organique et de l'eau, ledit canal d'introduction étant muni d'une embouchure d'introduction par laquelle est introduit le fluide chargé dans le canal d'introduction ;
- une sortie de la zone de confinement pour évacuer hors de l'enceinte les effluents produits dans la zone de confinement ;

le réacteur étant caractérisé en ce qu'il comporte en outre :
   - un système d'agitation du canal d'introduction adapté pour créer des turbulences dans le fluide chargé dans ledit canal d'introduction ;
   - au moins un deuxième système de refroidissement adapté pour créer, dans le fluide chargé, un gradient de température le long du canal d'introduction entre une température dite froide, inférieure à une température de réaction régnant dans la zone de confinement, et la température de réaction ;
et le réacteur étant caractérisé en ce que le premier système de refroidissement est une boucle froide de circulation externe ayant une entrée et une sortie de fluide débouchant dans la zone périphérique froide, et le système de chauffage est une boucle chaude de circulation externe ayant une entrée et une sortie de fluide débouchant dans la zone périphérique chaude, chaque boucle de circulation étant équipée d'un circulateur et d'un échangeur thermique, et ayant comme caloporteur le fluide oxydant circulant dans la zone périphérique, un élément étant placé dans la zone périphérique pour séparer les boucles froide et chaude, tout en permettant un passage du fluide oxydant de la zone périphérique froide vers la zone périphérique chaude.

On précise que les effluents qui sont produits dans la zone de confinement et qui sont évacués hors de l'enceinte par la sortie de la zone de confinement sont les effluents qui sont produits par traitement par oxydation hydrothermale de la matière organique dans le milieu réactionnel ; en d'autres termes, ce sont les effluents qui sont produits par la réaction d'OHT ou d'OVH.

Comme connu de l'art antérieur, un organe de confinement peut être un tube et sert à délimiter, au sein de la cavité de l'enceinte, la zone de confinement de la zone périphérique.

L'élément qui est placé dans la zone périphérique a pour fonction de séparer les boucles froide et chaude en créant une résistance à l'écoulement du fluide oxydant de la zone périphérique froide vers la zone périphérique chaude.

Le fluide chargé contient de l'eau et de la matière organique, la matière organique pouvant être solide ou liquide, et étant miscible ou non avec l'eau.

Le gradient de température se situe entre la température d'introduction du déchet (réalisé de préférence à température ambiante) et la température requise à la réaction d'OVH ou d'OHT.

On rappelle que, dans le cadre de la présente invention, lorsqu'on fait référence à un procédé, il s'agit du procédé de destruction de déchet (matière organique) par voie hydrothermale. Le procédé de destruction de déchet par voie hydrothermale utilise la réaction d'OVH ou d'OHT, i.e. la réaction de combustion dans l'eau sous ou supercritique, respectivement.

Le milieu réactionnel est, quant à lui, le mélange des réactifs eau, déchet, oxydant qui, porté aux conditions opératoires de pression et température, développera spontanément la réaction de combustion attendue.

Certains aspects préférés mais non limitatifs de ce réacteur sont les suivants:
- le système d'agitation comporte un premier élément agitateur s'étendant dans le canal d'introduction, ledit premier élément agitateur étant préférentiellement solidaire d'un système d'agitation de la zone de confinement ; il peut par exemple s'agir d'un arbre rotatif ;
- le canal d'introduction est au moins en partie logé dans un passage du fluide oxydant, le fluide oxydant circulant dans ledit passage entre le deuxième système de refroidissement et le système de chauffage, de manière à créer le gradient de température entre la température froide et la température de réaction ;
- le réacteur comprend en outre une zone de mélange dans laquelle sont mélangées la matière organique et un fluide aqueux pour former le fluide chargé, ladite zone de mélange étant en amont de l'embouchure d'introduction ; de préférence, la matière organique et le fluide aqueux sont mélangés à froid, c'est-à-dire sans être au préalable chauffés ;

- le système d'agitation comporte en outre un deuxième élément agitateur agencé dans la zone de mélange, le deuxième élément agitateur étant préférentiellement solidaire du premier élément agitateur; il peut par exemple s'agir d'une pale de turbine ;
- les circulateurs des boucles froide et chaude sont un double circulateur, en commun pour les deux boucles ;
- le réacteur comprend en outre une boucle de recyclage des effluents produits dans la zone de confinement, cette bouche de recyclage reliant la sortie de la zone de confinement à une entrée de fluide située en amont de l'embouchure d'introduction du canal d'introduction ; de préférence, l'entrée de fluide débouche dans la cavité de mélange ;
- le deuxième système de refroidissement est une double enveloppe alimentée en eau glacée, située au droit du canal d'introduction, en aval de l'embouchure d'introduction ;
- le canal d'introduction et l'organe de confinement sont solidaires et coaxiaux, l'enceinte comprenant une première portion, dans laquelle est logée l'organe de confinement, et une deuxième portion, dans laquelle est logée au moins une partie du canal d'introduction, les première et deuxième portions étant coaxiales et la deuxième portion ayant une section au moins deux fois plus petite que la section de la première portion.

L'invention présente de nombreux avantages. Les améliorations apportées permettent notamment :
- de pouvoir, à volume réactionnel donné, augmenter de manière significative la capacité de traitement en continu de la matière organique de faible à fort PCI ;
- d'améliorer les possibilités d'instrumentation au plus près de la réaction, ou en d'autres termes, d'opérer un suivi des températures (par exemple dans la boucle chaude), afin d'augmenter l'efficacité de la réaction tout en garantissant l'intégrité du réacteur sous pression ;

- de permettre le contrôle thermique de l'OHT au débit souhaité, indépendamment des conditions d'alimentation en fluide oxydant ;
- d'assurer un refroidissement efficace et en continu des produits de la réaction d'OHT ;
- d'augmenter la disponibilité du réacteur (du fait notamment, d'une part, de la diminution du temps de maintenance des composants internes (tube de confinement et système d'agitation) et, d'autre part, de la limitation des connectiques sous pression et à températures variables) ; cela est notamment obtenu en améliorant la robustesse des composants mis en œuvre dans le procédé en agissant sur l'introduction de la matière organique (déchets) dans la zone réactionnelle ;
- d'améliorer le contrôle de la réaction de combustion en améliorant l'efficacité des moyens d'évacuation (ou d'injection) de puissance thermique au niveau de la zone réactionnelle dans le tube de confinement ;
- de simplifier le dimensionnement des composants sous pression, notamment les composants de chauffe et de refroidissement, en dissociant ces fonctions de la fonction de réaction d'OHT, et ainsi de simplifier son extrapolation à des tailles supérieures ; cela permet notamment d'envisager facilement une extrapolation à un réacteur de taille industrielle, contraignant en termes de dimensionnement et d'environnement ;
- d'extraire efficacement la puissance thermique dégagée par la réaction d'oxydation de la matière organique pour la transférer vers un circuit secondaire et la valoriser.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
- la figure 1, déjà décrite, représente une vue en coupe d'un réacteur continu à double enveloppe agité selon l'art antérieur ;
- la figure 2 représente une vue en coupe d'un premier mode de réalisation d'un réacteur selon l'invention ;
- la figure 3 représente une vue en coupe d'un deuxième mode de réalisation d'un réacteur selon l'invention, ce deuxième mode étant une variante du premier mode de réalisation utilisant un double circulateur ;
- la figure 4 représente une vue en coupe d'un troisième mode de réalisation d'un réacteur selon l'invention, ce troisième mode permettant un recyclage des effluents aqueux.

### EXPOSÉ DÉTAILLÉ DE MODES DE RÉALISATION PARTICULIERS

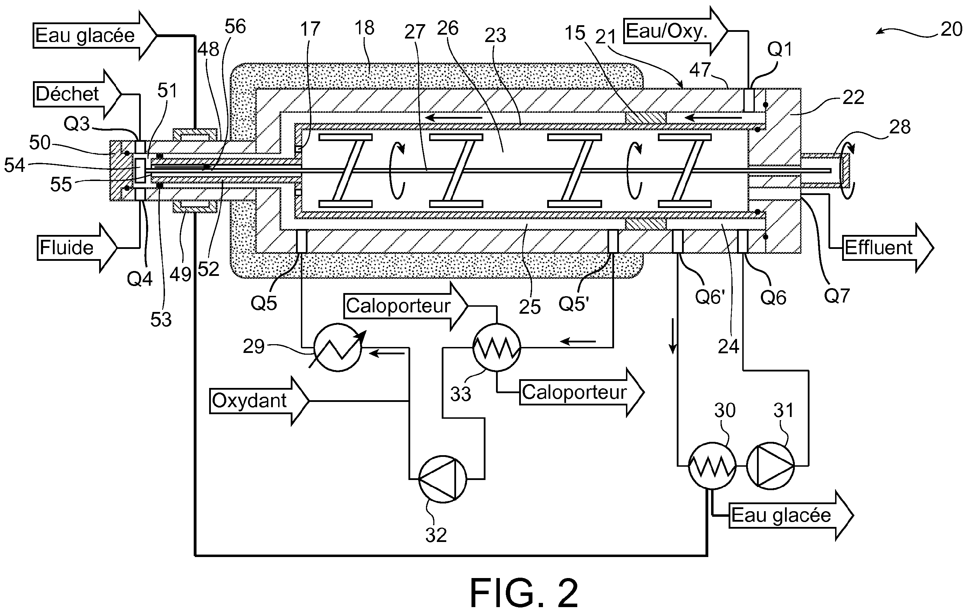

On a représenté sur la figure 2 une vue schématique d'un réacteur 20 selon un mode de réalisation de l'invention.

L'enceinte 21 du réacteur 20 délimite une cavité ouverte de forme longitudinale, fermée par une bride 22 d'interface, maintenue à température ambiante.

Comme dans l'art antérieur, un organe de confinement 23 (par exemple un tube) est placé à l'intérieur de la cavité de l'enceinte 21 et monté étanche sur la bride 22. Cet organe de confinement 23 délimite une zone périphérique (qui est une zone annulaire, lorsque l'enceinte et le corps de confinement sont tubulaires), entre son extrados et la cavité de l'enceinte 21, et une zone intérieure de confinement 26, qui est en communication fluidique avec la zone périphérique par le biais d'au moins une ouverture 17 (située du côté chaud du l'enceinte 21), et qui contient le milieu réactionnel.

La zone périphérique comporte une zone périphérique froide 24, située au niveau de la bride 22, et une zone périphérique chaude 25, recouverte d'un revêtement calorifuge 18.

L'organe de confinement 23 est statique par rapport à l'enceinte 21 sous pression du réacteur, et le mélange réactionnel situé à l'intérieur de l'organe de confinement 23 est maintenu sous agitation mécanique comme dans le document **[1],** à l'aide d'un système d'agitation 27, par exemple un arbre rotatif équipé de pales, entrainé en rotation par une motorisation à entrainement magnétique 28.

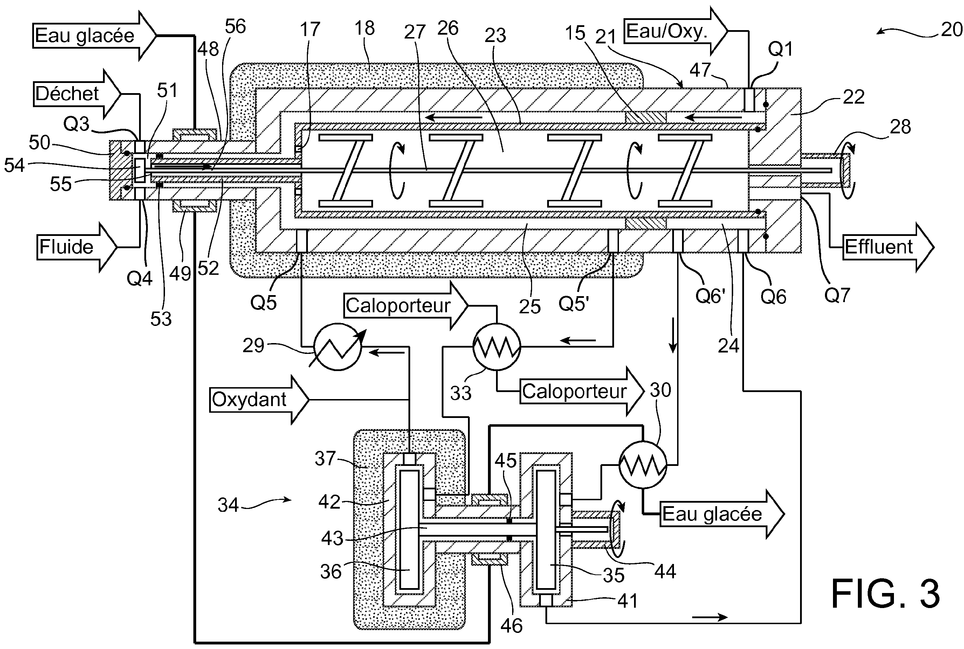

L'eau formant le milieu réactionnel est introduite en (Q1) au débit opératoire et chemine dans la zone périphérique entre l'extrados de l'organe de confinement 23 et la paroi de l'enceinte 21. L'oxydant requis par la réaction d'OVH ou d'OHT, qu'il s'agisse d'air, d'oxygène, de peroxyde d'hydrogène, etc., peut également être introduit en totalité ou en partie en (Q1). Dans les figures 2 et 3, l'oxydant est introduit en partie en (Q1) et en partie dans la boucle chaude (Q5-Q5').

Au final, un mélange que nous appellerons « fluide oxydant », formé de l'eau et de l'oxydant nécessaires à la réaction, circule dans la zone périphérique jusqu'à entrer dans la zone de confinement par les ouvertures 17.

Dans la présente invention, on améliore l'introduction du déchet dans la zone réactionnelle (i.e. la zone de confinement 26) en introduisant le déchet à traiter dans cette zone de confinement 26 par le biais d'une connectique haute pression maintenue à basse température. Pour ce faire, l'enceinte comporte, comme illustré dans les figures 2, 3 et 4, une première portion 47, qui est prolongée à son extrémité chaude par une deuxième portion 48 de faible section. De préférence, il s'agit de portions tubulaires coaxiales. Sur la deuxième portion 48, il est mis en place, à distance de l'extrémité chaude de la première portion 47 et hors du revêtement calorifuge 18, un deuxième système de refroidissement 49 apte à maintenir cette deuxième portion à température ambiante ; il peut par exemple s'agir d'une double enveloppe refroidie activement par circulation d'une eau glacée.

Selon une configuration préférée, l'extrémité libre de cette deuxième portion 48 peut être ouverte et fermée par un système de fermeture de type bouchon 50 avec un joint en élastomère assurant l'étanchéité de l'enceinte à la pression opératoire du procédé d'OHT ou d'OVH. L'ouverture de ce bouchon 50 donne un accès aisé à une cavité de mélange 51 dans laquelle débouchent les raccordements des alimentations Q3 et Q4. Le système de fermeture de type bouchon n'a qu'à résister à la contrainte de pression et aux réactifs chimiques, mais pas à la température.

Comme illustré dans les figures 3 à 5, l'organe de confinement 23, présent dans la cavité dans la première portion 47 de l'enceinte, est prolongé de manière étanche, dans la deuxième portion 48 de l'enceinte, par un canal d'introduction 52 qui s'étend au-delà du deuxième système de refroidissement 49. Une étanchéité entre le canal d'introduction 52 et la deuxième portion 48 d'enceinte est assurée par un joint 53, par exemple un presse étoupe, disposé entre ces deux éléments dans la partie froide.

Le matériau du joint 53 est réalisé par exemple en téflon^{™}, de sorte qu'il puisse résister à une éventuelle agression chimique du déchet à traiter, à la pression opératoire, mais à température ambiante. Tout comme l'ensemble formé par le canal d'introduction 52 et l'organe de confinement 23, le joint 53 réalise sa fonction d'étanchéité avec une faible pression différentielle, à pression opératoire. De surcroit, il permet d'accommoder une dilatation différentielle axiale entre la première portion 47 de l'enceinte et l'organe de confinement 23 (et donc entre la deuxième portion 48 de l'enceinte et le canal d'introduction 52), liés mécaniquement à la bride 22.

Un système d'agitation est placé dans le canal d'introduction afin de créer des turbulences dans le fluide (déchet) qui le traverse. De préférence, le système d'agitation 27 du type turbine qui agite l'intérieur de l'organe de confinement 23, est également prolongé au moyen d'un axe 56 qui parcourt le canal d'introduction 52, jusqu'à rejoindre la cavité de mélange 51. Au niveau de la cavité de mélange 51, un mobile d'agitation 54, par exemple une pale, est monté sur l'axe du système d'agitation 27.

La cavité de mélange 51, à pression opératoire, est maintenue froide par l'action du deuxième système de refroidissement 49 (double enveloppe refroidie). Le déchet peut être introduit en continu à froid par une pompe haute pression à la connexion (Q3), éventuellement avec un autre fluide via la connexion (Q4), auquel il est mélangé à froid par le mobile d'agitation 54. Ce mélange est maintenu sous agitation dans la cavité de mélange 51, puis pénètre dans le canal d'introduction au niveau d'une embouchure 55 et se réchauffe progressivement au-delà du deuxième système de refroidissement 49, pour finalement aboutir dans la zone réactionnelle (i.e. la zone de confinement 26) au sein de l'organe de confinement 23 et être mélangé aux autres réactifs, préchauffés (eau, comburant) et également introduits dans cette zone réactionnelle, mais à partir de la zone périphérique située sur l'extrados de l'organe de confinement via les ouvertures 17. La réaction de combustion se développe alors de manière spontanée, sous agitation dans l'organe de confinement 23.

De préférence, le canal d'introduction est un tube de faible diamètre.

Durant la phase de réchauffement du déchet, celui-ci circule dans un espace annulaire compris entre l'axe 56 de la turbine et le canal d'introduction 52. Ainsi, l'encrassement potentiel dû à des amorces de précipitations salines, ou de pyrolyse, est limité par le mouvement de l'axe 56.

Ainsi, dans la présente invention, on a réussi à améliorer la robustesse, vis-à-vis de la contrainte mécanique dans les conditions opératoires, des composants requis pour l'introduction des déchets dans le milieu réactionnel en procédant au raccordement des lignes d'injection haute pression sur des passages refroidis activement, tout en s'assurant que les fluides et déchets introduits par ces lignes d'injection ne conduisent pas à une obstruction dommageable au fonctionnement du procédé (une obstruction dans le canal d'introduction étant notamment empêchée grâce à un échauffement sous agitation mécanique par l'élément 56).

Une partie des raccordements est également réalisée sur la bride de fermeture 22 maintenue froide par la boucle de circulation (Q6-Q6'). Pour injecter une partie des réactifs au plus près de la zone chaude du réacteur dans l'organe de confinement 23, les injections de déchet (Q3) et (Q4) sont réalisées au niveau du prolongement 48 de faible section de l'enceinte sur lequel est mis en place un deuxième système de refroidissement 49 (double enveloppe). Du fait de cette faible section, il est aisé de créer une zone de raccordement froide, agitée par exemple par un mobile d'agitation 54, solidaire du système d'agitation 27 de la zone de confinement 26, et permettant d'introduire ces réactifs via un passage, agité et de faible section de communication, formé entre le canal d'introduction 52 et l'axe 56.

Deux piquages (Q6 et Q6'), réalisés dans la paroi de l'enceinte du côté de la bride 22, permettent le raccordement d'un circuit fluide externe froid, à partir de la zone périphérique (formant ainsi la zone périphérique froide 24). Ils définissent un tronçon de l'enceinte où les fluides sont maintenus à température ambiante.

Deux piquages (Q5 et Q5'), réalisés dans la paroi de l'enceinte au niveau du revêtement calorifuge 18, permettent le raccordement d'un circuit fluide externe chaud, à partir de la zone périphérique (formant ainsi la zone périphérique chaude 25). Ils définissent un tronçon de l'enceinte où les fluides sont maintenus à température opératoire chaude.

Entre les tronçons (Q5-Q5') et (Q6-Q6') est mis en place, dans la zone périphérique, un élément 15 faisant office de diffuseur afin de séparer les boucles froide et chaude, tout en permettant un passage du fluide oxydant de la zone périphérique froide 24 vers la zone périphérique chaude 25. Cet élément 15 crée une légère perte de charge dans l'écoulement dans la zone périphérique en allant de Q6' à Q5'.

La présence des deux boucles de circulation, à savoir la boucle chaude (Q5-Q5') située au droit de la partie où se déroule la réaction, et la boucle froide (Q6-Q6'), située au droit de la partie où se situent les effluents avant leur évacuation en (Q7) de la zone réactionnelle, permet d'améliorer les échanges thermiques entre l'organe de confinement 23 et l'enceinte 21 du réacteur 20, par rapport au réacteur de l'art antérieur illustré dans la figure 1.

Ces deux boucles utilisent comme caloporteur le fluide qui est situé au niveau de l'extrados de l'organe de confinement, dans la zone périphérique.

Ce fluide caloporteur est constitué de tout ou partie du fluide oxydant, qui correspond au mélange d'eau et d'oxydant (air, oxygène, H₂O₂, etc.) qui est injecté en (Q1) depuis l'extérieur de l'enceinte au débit requis par la réaction de combustion attendue. Lors de sa circulation, ce fluide caloporteur contribue au refroidissement des effluents issus de la réaction qui circulent à contre-courant dans la zone de confinement 26 de l'organe de confinement, est préchauffé par le dégagement de puissance thermique issue de la réaction de combustion ayant lieu dans la zone confinement 26 de l'organe de confinement 23, et pénètre dans cette zone de confinement 26 en amont de la réaction au niveau des ouvertures 17. C'est ainsi que :
- le confinement de la réaction est assuré de manière dynamique dans l'organe de confinement 23 ;
- la perte de charge lors de l'introduction du fluide oxydant par les ouvertures 17 est minimisée par le fait qu'au niveau de cette introduction par les ouvertures 17, le fluide oxydant est, dans le cas de l'OHT, supercritique, et par conséquent très peu visqueux, permettant ainsi de concevoir un organe de confinement 23 opérant en quasi équipression entre son intrados et son extrados, pouvant ainsi être relativement mince, et constituer un échangeur de chaleur très efficace.

L'utilisation du fluide oxydant comme fluide caloporteur permet ainsi d'utiliser l'organe de confinement 23 comme un échangeur de chaleur très efficace entre les deux boucles de circulation (Q5-Q5') et (Q6-Q6') à l'extérieur de l'organe de confinement 23, d'une part, et le mélange réactionnel situé à l'intérieur de l'organe de confinement 23, d'autre part.

L'efficacité de l'organe de confinement 23 comme échangeur tient, d'une part, au fait que, de part et d'autre de la paroi de cet organe de confinement, les fluides ont un écoulement fortement turbulent du fait i/ de l'agitation mécanique dans la zone de confinement 26 à l'aide du système d'agitation 27 et ii/ du fait de la circulation forcée dans les boucles extérieures (Q5-Q5' et Q6-Q6'), et d'autre part, au fait que l'épaisseur de l'organe de confinement est faible, n'ayant à résister qu'à de faibles pressions différentielles en conditions de fonctionnement.

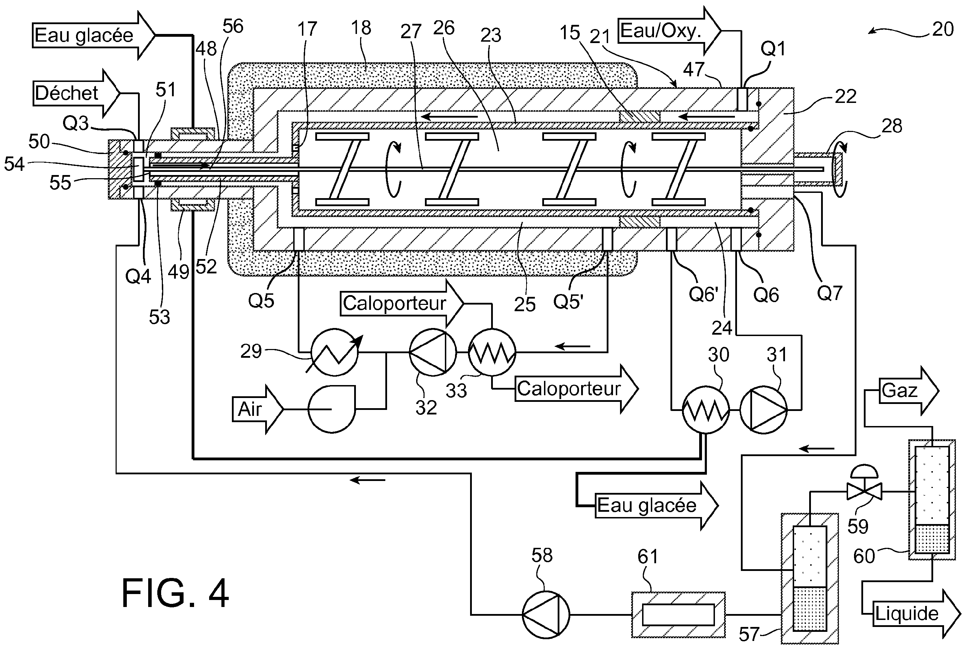

Il est à noter qu'il est possible d'injecter un complément éventuel d'eau et/ou d'oxydant dans l'une ou l'autre des boucles externes. Par exemple, dans la figure 4, on introduit un complément d'oxydant dans la boucle chaude (Q5-Q5').

La boucle de circulation froide (Q6-Q6') est refroidie par un échangeur externe 30 alimenté par une source froide, par exemple de l'eau glacée, et est mise en circulation par le circulateur froid 31, qui permet de refroidir l'extrados de l'organe de confinement 23, et par conséquent les effluents issus de la zone réactionnelle avant leur évacuation de l'enceinte 21. Par ailleurs, cette boucle de circulation froide (Q6-Q6') permet de maintenir la bride 22 à basse température (c'est-à-dire une température inférieure à 100°C), et permettre l'utilisation d'un joint sans performances thermiques particulières pour assurer l'étanchéité entre l'enceinte 21 du réacteur et cette bride 22.

La boucle de circulation chaude (Q5-Q5') est mise en circulation par un circulateur chaud 32, et met en communication l'extrados de l'organe de confinement 23 au droit de la zone (Q5-Q5') où se déroule la réaction, un réchauffeur 29, ainsi qu'un échangeur chaud 33, tous deux extérieurs à l'enceinte. Le réchauffeur 29 permet de porter le fluide oxydant à la température opératoire en phase de démarrage de la réaction, et de maintenir en température la zone réactionnelle (i.e. la zone de confinement 26) lorsque la puissance dégagée par la réaction de combustion est insuffisante pour assurer la préchauffe des fluides réactionnels (eau, comburant, déchet).

L'échangeur chaud 33 permet de refroidir activement le fluide oxydant en fin d'exploitation, et d'extraire la puissance thermique excédentaire produite par la réaction de combustion vers une source froide pour maintenir stables les conditions opératoires de la réaction de combustion, y compris en cas de régime auto-thermique. La puissance thermique extraite de cette boucle chaude peut également être exploitée par une machine thermique, dont l'échangeur 33 est la source chaude.

Au niveau de l'organe de confinement 23, ces deux circuits de caloporteurs sont séparés par un élément 15 faisant office de diffuseur, qui permet de limiter les courts circuits entre ces deux boucles de circulation, tout en permettant que le fluide oxydant puisse, en bilan net, être transféré à contre-courant depuis la bride froide 22 du réacteur20, jusqu'en tête de zone chaude au niveau des ouvertures 17. Cet élément diffuseur 15 peut par exemple être réalisé à partir d'un fritté métallique, d'une garniture métallique, ou d'une mousse minérale ou métallique. Le débit net de fluide oxydant à travers l'élément diffuseur 15 est relativement faible et la perte de charge qu'induit cet élément diffuseur entre les deux boucles de caloporteur est par conséquent faible (quelques Pa).

Selon un mode de réalisation illustré dans la figure 3, la mise en circulation de ces deux boucles de circulation peut être réalisée par un double circulateur 34. Ce double circulateur 34 est pourvu d'une zone chaude, calorifugée par un revêtement 37, contenant une turbine chaude 36 logée dans un compartiment 42 résistant à la pression opératoire et aux conditions de service à température opératoire du procédé pour le fluide caloporteur qu'il contient. On rappelle que la température opératoire est la température désirée pour que la réaction de combustion puisse se développer dans la zone réactionnelle. Ce double circulateur est également pourvu d'une zone froide, non calorifugée, contenant une turbine froide 35 logée dans un compartiment 41 résistant à la pression opératoire et à la température ambiante au fluide caloporteur qu'il contient.

La turbine chaude 36 et la turbine froide 35 opèrent sur des circuits hydrauliques qui sont à la même pression opératoire, du fait de la présence de l'élément diffuseur 15. Ces turbines sont montées sur un même axe moteur 43, lui-même mis en mouvement par un entraînement magnétique 44 monté sur cet axe au niveau du compartiment 41. Les courts circuits entre les deux boucles de caloporteurs au niveau de la double turbine sont aisément évités par la mise en place d'une garniture tournante 45 sur l'axe moteur 43. La sectorisation du chaud et du froid sur cette double turbine est assurée par une simple double enveloppe 46, mise en place sur la surface extérieure du corps de la turbine, au droit de l'axe moteur 43.

Dans la présente invention, la stratégie pour améliorer le contrôle de la puissance thermique dégagée par la réaction d'OVH ou d'OHT et maîtriser le maintien des conditions opératoires (moyens de traitement thermique (chauffages, refroidisseurs, échangeurs, etc.) et moyens de suivi de température), a consisté, par le biais de la création des boucles externes chaudes et froides de caloporteur, à déporter ces fonctions dans des équipements dédiés, situés hors de l'enceinte du réacteur, tout en assurant un couplage thermique performant de la réaction d'OVH ou OHT avec ces équipements à travers un organe de confinement ayant une épaisseur relativement fine, ceci étant rendu possible par l'usage, comme caloporteur, du fluide oxydant alimentant la réaction attendue. En d'autres termes, l'organe de confinement a une fonction d'échangeur thermique optimisée du fait que son caloporteur est le fluide oxydant qui est à des conditions opératoires (température et pression) proches de celle de la réaction se développant à l'intérieur de l'organe de confinement.

Le réchauffeur 29 est réalisé par des moyens connus de l'homme de l'art (résistance chauffante électrique sur circuit haute pression, brûleur, etc.). Il en est de même de l'échangeur froid 30, qui est réalisé par exemple par circulation du circuit haute pression dans une boite à eau refroidie par une source froide.

L'échangeur chaud 33 peut constituer la source chaude d'une machine thermique permettant de valoriser, via une boucle de caloporteur, l'excès de puissance thermique dégagée par la réaction d'OVH ou d'OHT, ces technologies étant connues de l'homme de l'art.

Le réacteur amélioré selon l'invention permet également la mise en œuvre d'un recyclage des effluents, les effluents aqueux issus du procédé étant réintroduits pour alimenter la réaction. Une limitation connue des procédés continus d'OHT ou d'OVH est que la réaction de combustion du déchet organique se fait avec une importante dilution du déchet dans le milieu eau (de 1 à 10% massique classiquement). La conséquence en est que pour un débit organique à traiter, la réaction requiert un débit minimal d'eau injecté.

Si l'environnement du procédé est contraint du point de vue du débit d'effluents produits, on conçoit qu'il est particulièrement avantageux de réutiliser l'effluent produit (contenant principalement de l'eau, les sels minéraux présents dans le déchet initial, et des traces d'éléments organiques n'ayant pas complètement réagi) pour alimenter le procédé en phase aqueuse. Ce recyclage permet ainsi de diminuer en bilan net le flux d'effluent produit par rapport au flux de déchet traité.

Les effluents produits n'étant pas uniquement constitués d'eau, il ne peut être exclu que leur composition soit néfaste à la tenue du réacteur, aussi est-il potentiellement préjudiciable de les introduire par exemple via le piquage (Q1). La création de la cavité de mélange 51 permet d'introduire cet effluent recyclé dans la zone réactionnelle avec le déchet à traiter, depuis une zone maintenue froide, dans l'organe de confinement 23 via le canal d'introduction 52. L'axe 56, situé dans le canal d'introduction, permet l'échauffement de l'effluent recyclé, tout en limitant l'impact de la précipitation des sels qu'il contient éventuellement sur le bouchage ou la corrosion du canal d'introduction.

Un mode de réalisation du réacteur selon l'invention avec une boucle de recyclage des effluents est illustré dans la figure 4. En sortie (Q7) de l'enceinte est placé un séparateur gaz liquide 57 à pression opératoire du réacteur. En pied de ce séparateur 57, une fraction composée essentiellement de phase aqueuse est prélevée continûment par une pompe volumétrique 58 pour être injectée en (Q4). En tête de ce séparateur 57 est positionné un système de régulation de pression opératoire représenté par une vanne de régulation 59 purgeant de manière asservie le volume sous pression vers un séparateur gaz/liquide à basse pression 60.

Le cas échéant, le fluide recyclé peut subir un traitement à pression opératoire avant d'être réutilisé. Ce traitement sera réalisé dans un composant 61, qui peut être, par exemple, un filtre pour limiter la réintroduction de particules ou encore un lit fixe ou mobile d'éléments destinés à retenir tout ou partie de la charge saline soluble de l'effluent aqueux et limiter sa réintroduction en tête de réacteur.

Au final, les points forts des différentes améliorations du réacteur selon l'invention sont les suivants :
- la suppression de tous les raccords HP assurant l'étanchéité sous pression de l'enceinte du réacteur, situés à proximité de la zone réactionnelle d'OHT ou d'OVH et/ou sous température, qu'il s'agisse de l'injection ou de l'extraction de fluides ou de prises de mesures (température, pression). L'introduction des déchets de matière organique en (Q3) s'effectue au niveau de la zone froide créée à l'embouchure 55 du canal d'introduction. Cette nouvelle configuration permet d'assurer une étanchéité à pression opératoire et à froid ;
- une configuration permettant d'améliorer l'efficacité des transferts thermiques avec le milieu réactionnel au moyen d'un circulateur 31 froid et d'un circulateur 32 chaud externes à l'enceinte du réacteur, de préférence au moyen d'un double circulateur 34 externe à l'enceinte, permettant de créer une boucle froide et une boucle chaude dont le caloporteur est le fluide oxydant composé de l'eau et de l'oxydant (mélange appelé fluide oxydant) destinés à réagir, dans la zone réactionnelle, avec le déchet organique à détruire ;
- une configuration où la boucle froide permet de refroidir les effluents issus du procédé en utilisant le caloporteur pour les refroidir à travers l'organe de confinement dont la paroi est fine et l'échange thermique efficace, du fait i/ du faible gradient de pression de part et d'autre de cet organe en régime de fonctionnement nominal, ii/ de la vitesse et la turbulence de l'écoulement du caloporteur contrôlé par un circulateur dédié 31, iii/ de la turbulence de l'écoulement du fluide réactionnel contrôlée par l'agitation mécanique (par le système d'agitation 27) dudit fluide réactionnel ;
- une configuration où la boucle chaude permet de maintenir homogènes les conditions de température opératoire de la zone où se déroule la réaction de combustion des déchets organiques ; cette homogénéité est assurée en extrayant ou fournissant une puissance calorifique à travers la paroi de l'organe de confinement 23 dont la paroi est fine et l'échange thermique efficace, du fait i/ du faible gradient de pression de part et d'autre de cet organe en régime de fonctionnement nominal, ii/ de la vitesse et la turbulence de l'écoulement du caloporteur contrôlé par un circulateur dédié 32, iii/ de la turbulence de l'écoulement du fluide réactionnel contrôlée par l'agitation mécanique (par le système d'agitation 27) du réacteur. Cette configuration permet de maximiser, à volume sous pression donné dans le réacteur, le volume utile pour conduire la réaction d'OHT ou d'OVH ;
- une configuration où la boucle chaude permet d'extraire l'excédent de puissance dégagée par la réaction d'OHT ou d'OVH dans une source chaude 33 à température opératoire du procédé permettant de valoriser cette puissance dans une machine thermique ;
- une configuration où les deux fonctions de circulation de caloporteurs, circulation froide 31 et circulation chaude 32, sont assurées par un unique composant sous pression (double circulateur 34), les deux circuits opérant à une très légère différence de pressions, ces deux circuits étant séparés par une garniture étanche 45 du côté du double circulateur, et par un élément diffuseur 15 du côté de l'enceinte du réacteur. Les circulateurs sont mis en rotation par le biais d'un entraînement magnétique motorisé, accouplé du côté froid de ce double circulateur ;
- une configuration où le suivi des températures pour garantir que le réacteur sous pression opère dans un domaine acceptable est simplifié par la prise de température dans la boucle chaude (Q5-Q5') hors de l'enceinte, par exemple au niveau du raccordement (Q5') ;
- une configuration où la conception de l'enceinte et de ses éléments internes (principalement la géométrie et les surfaces d'échange de l'organe de confinement 23 servant d'échangeur thermique) est simplifié, par le déport des fonctions de chauffe et de refroidissement dans des équipements spécialisés, avec un couplage thermique très efficace et aisé à réaliser du fait que les circuits de caloporteurs (Q5-Q5') et (Q6-Q6') sont réalisés avec le fluide oxydant à la pression opératoire ;
- une configuration où l'injection des réactifs est réalisée par les raccordements maintenus froids sur l'enceinte du réacteur où se déroule la réaction de combustion. Le déchet est pré-mélangé à température ambiante et pression opératoire dans un volume froid (cavité de mélange 51) et mis en communication avec l'organe de confinement 23 confinant la réaction à température et pression opératoires via une canalisation (canal d'introduction) solidaire et, de préférence, du même matériau que l'organe de confinement 23 et maintenue sous agitation mécanique par l'axe 56, prolongeant l'axe du système d'agitation 27 de l'organe de confinement 23, et laissant une faible section de passage où l'échauffement des réactifs ne conduira pas à l'accumulation de produits ayant partiellement réagi ;
- une configuration permettant la mise en œuvre aisée d'une réutilisation à pression opératoire de tout ou partie des effluents issus de la réaction pour former le milieu réactionnel ; par le biais du volume agité (cavité de mélange 51), ces effluents, qui ne sont potentiellement pas constitués uniquement d'eau pure, et pouvant donc contenir des éléments pouvant dégrader l'enceinte par corrosion ou précipitation, sont injectés en (Q4), dans le volume réactionnel confiné par l'organe de confinement 23, à distance des parois de l'enceinte, en étant mélangés à froid et à la pression opératoire avec le déchet introduit par le piquage (Q3) dans un espace situé avant l'embouchure 55 de la canalisation d'introduction. Cette configuration permet de diminuer le bilan net de consommation d'eau ou de production d'effluents aqueux lors du traitement par OHT ou d'OVH de déchets organiques, tout en i/ limitant la dépense énergétique de compression des fluides alimentant le procédé et en ii/ assurant la robustesse du procédé par rapport à l'utilisation de ce flux effluent.

### REFERENCES CITEES

**[1]** WO 02/30836 A1
**[2]** WO 2007/036526 A2
**[3]** WO 2014/111581 A1

## Revendications

1. Réacteur (20) pour le traitement par oxydation hydrothermale d'une matière organique dans un milieu réactionnel, le réacteur comprenant :
- une enceinte (21) délimitant une cavité dans laquelle est logé un organe de confinement (23) définissant une zone, intérieure, dite de confinement (26), destinée à contenir le milieu réactionnel, et une zone, extérieure, dite périphérique ;
- au moins une entrée de fluide oxydant (Q1) pour introduire un fluide oxydant dans la zone périphérique ;
- au moins un premier système de refroidissement configuré pour refroidir le fluide oxydant au niveau de l'entrée de fluide oxydant (Q1) dans une première portion de la zone périphérique, de manière à définir une zone périphérique froide (24) ;
- au moins un système de chauffage (Q5-Q5') pour chauffer le fluide oxydant dans une deuxième portion de la zone périphérique, avant son introduction dans la zone de confinement (26), de manière à définir une zone périphérique chaude (25) ;
- au moins un canal d'introduction (52) de la matière organique dans la zone de confinement (26) pour introduire un fluide chargé, comprenant la matière organique et de l'eau, ledit canal d'introduction étant muni d'une embouchure d'introduction (55) par laquelle est introduit le fluide chargé dans le canal d'introduction ; et
- une sortie (Q7) de la zone de confinement pour évacuer hors de l'enceinte (21) les effluents produits dans la zone de confinement (26) ;
la zone de confinement (26) et la zone périphérique étant en communication fluidique par le biais d'au moins une ouverture (17) disposée dans l'extrémité de l'organe de confinement (23) située dans la zone périphérique chaude (25) ;
le réacteur étant **caractérisé en ce qu'**il comporte en outre :
- un système d'agitation (56 ; 54) du canal d'introduction (52) adapté pour créer des turbulences dans le fluide chargé dans ledit canal d'introduction ;
- au moins un deuxième système de refroidissement (49) adapté pour créer, dans le fluide chargé, un gradient de température le long du canal d'introduction (56) entre une température dite froide, inférieure à une température de réaction régnant dans la zone de confinement (26), et la température de réaction ;
et le réacteur étant **caractérisé en ce que** le premier système de refroidissement (Q6-Q6') est une boucle froide de circulation externe ayant une entrée (Q6') et une sortie (Q6) de fluide débouchant dans la zone périphérique froide (24), et le système de chauffage (Q5-Q5') est une boucle chaude de circulation externe ayant une entrée (Q5') et une sortie (Q5) de fluide débouchant dans la zone périphérique chaude (25), chaque boucle de circulation étant équipée d'un circulateur (31; 32) et d'un échangeur thermique (30; 33), et ayant comme caloporteur le fluide oxydant circulant dans la zone périphérique, un élément (15) étant placé dans la zone périphérique pour séparer les boucles froide et chaude, tout en permettant un passage du fluide oxydant de la zone périphérique froide (24) vers la zone périphérique chaude (25).

2. Réacteur (20) selon la revendication 1, dans lequel le système d'agitation (56 ; 54) comporte un premier élément agitateur (56) s'étendant dans le canal d'introduction, ledit premier élément agitateur étant préférentiellement solidaire d'un système d'agitation (27) de la zone de confinement (26).

3. Réacteur (20) selon la revendication 1 ou la revendication 2, dans lequel le canal d'introduction (52) est au moins en partie logé dans un passage du fluide oxydant, le fluide oxydant circulant dans ledit passage entre le deuxième système de refroidissement (49) et le système de chauffage (Q5-Q5'), de manière à créer le gradient de température entre la température froide et la température de réaction.

4. Réacteur (20) selon l'une quelconque des revendications 1 à 3, comprenant en outre une zone de mélange (51) dans laquelle sont mélangées la matière organique et un fluide aqueux pour former le fluide chargé, ladite zone de mélange (51) étant en amont de l'embouchure (55) d'introduction.

5. Réacteur (20) selon la revendication 4, prise en combinaison avec la revendication 2, dans lequel le système d'agitation (56; 54) comporte en outre un deuxième élément agitateur (54) agencé dans la zone de mélange (51), le deuxième élément agitateur (54) étant préférentiellement solidaire du premier élément agitateur (27).

6. Réacteur (20) selon l'une quelconque des revendications 1 à 5, dans laquelle les circulateurs des boucles froide et chaude sont un double circulateur (34) en commun pour les deux boucles.

7. Réacteur (20) selon l'une quelconque des revendications 1 à 6, comprenant en outre une boucle de recyclage des effluents produits dans la zone de confinement, cette boucle de recyclage reliant la sortie (Q7) de la zone de confinement (26) à une entrée de fluide (Q4) située en amont de l'embouchure (55) d'introduction du canal d'introduction (52).

8. Réacteur (20) selon l'une quelconque des revendications 1 à 7, dans lequel le deuxième système de refroidissement (49) est une double enveloppe alimentée en eau glacée, située au droit du canal d'introduction (52), en aval de l'embouchure d'introduction.

9. Réacteur (20) selon l'une quelconque des revendications 1 à 8, dans le canal d'introduction (52) et l'organe de confinement (23) sont solidaires et coaxiaux, l'enceinte (21) comprenant une première portion (47), dans laquelle est logée l'organe de confinement (23), et une deuxième portion (48), dans laquelle est logée au moins une partie du canal d'introduction (52), les première et deuxième portions étant coaxiales et la deuxième portion (48) ayant une section au moins deux fois plus petite que la section de la première portion (47).

## Patentansprüche

1. Reaktor (20) zur Behandlung eines organischen Materials in einem Reaktionsmedium durch hydrothermale Oxidation, wobei der Reaktor Folgendes umfasst:
- ein Gehäuse (21), das einen Hohlraum umschließt, in dem ein Behälterelement (23) untergebracht ist, das eine innere Zone, den Behälter (26), definiert, der dazu bestimmt ist, das Reaktionsmedium aufzunehmen, und eine äußere Zone, die Peripherie, definiert;
- mindestens einen oxidierenden Fluideinlass (Q1) zum Einführen eines oxidierenden Fluids in die periphere Zone;
- mindestens ein erstes Kühlsystem, das so konfiguriert ist, dass es das oxidierende Fluid an dem oxidierenden Fluideinlass (Q1) in einem ersten Abschnitt der peripheren Zone kühlt, um eine kalte periphere Zone (24) zu definieren;
- mindestens ein Heizsystem (Q5-Q5') zum Erhitzen des oxidierenden Fluids in einem zweiten Abschnitt der peripheren Zone vor seiner Einführung in die Behälterzone (26), um eine heiße periphere Zone (25) zu definieren;
- mindestens einen Einführungskanal (52) für das organische Material in die Behälterzone (26) zum Einführen eines geladenen Fluids, umfassend das organische Material und Wasser, wobei der Einführungskanal mit einer Mündungseinführung (55) versehen ist, durch die das geladene Fluid in den Einführungskanal eingeführt wird; und
- einen Auslass (Q7) aus der Behälterzone, um die in der Behälterzone (26) erzeugten Abflüsse aus dem Gehäuse (21) abzuleiten;
wobei die Behälterzone (26) und die periphere Zone durch mindestens eine Öffnung (17) in Fluidverbindung stehen, die am Ende des Behälterelements (23) angeordnet ist, das sich in der heißen peripheren Zone (25) befindet;
wobei der Reaktor **dadurch gekennzeichnet ist, dass** er ferner Folgendes umfasst:
- ein Rührsystem (56; 54) des Einführungskanals (52), das ausgelegt ist, Verwirbelungen in dem in den Einführungskanal geladenen Fluid zu erzeugen;
- mindestens ein zweites Kühlsystem (49), das ausgelegt ist, in dem geladenen Fluid einen Temperaturgradienten entlang des Einführungskanals (56) zwischen einer sogenannten kalten Temperatur, die niedriger ist als eine Reaktionstemperatur, die in der Behälterzone (26) vorherrscht, und der Reaktionstemperatur zu erzeugen;
und wobei der Reaktor **dadurch gekennzeichnet ist, dass** das erste Kühlsystem (Q6-Q6') ein kalter externer Zirkulationskreislauf ist, der einen Einlass (Q6') und einen Auslass (Q6) für Fluid aufweist, die in die periphere kalte Zone (24) münden, und das Heizsystem (Q5-Q5') ein heißer externer Zirkulationskreislauf ist, der einen Einlass (Q5') und einen Auslass (Q5) für Fluid aufweist, die in die heiße periphere Zone (25) münden, wobei jeder Zirkulationskreislauf mit einem Zirkulator (31; 32) und einem Wärmetauscher (30; 33) ausgestattet ist und als Kühlmittel das in der peripheren Zone zirkulierende oxidierende Fluid aufweist, wobei ein Element (15) in der peripheren Zone angeordnet ist, um die kalten und heißen Kreisläufe zu trennen, während es den Durchgang des oxidierenden Fluids von der kalten peripheren Zone (24) zur heißen peripheren Zone (25) zulässt.

2. Reaktor (20) nach Anspruch 1, wobei das Rührsystem (56; 54) ein erstes Rührelement (56) umfasst, das sich in den Einführungskanal erstreckt, wobei das erste Rührelement vorzugsweise integral mit einem Rührsystem (27) der Behälterzone (26) ist.

3. Reaktor (20) nach Anspruch 1 oder Anspruch 2, wobei der Einführungskanal (52) zumindest teilweise in einem Durchgang des oxidierenden Fluids untergebracht ist, wobei das oxidierende Fluid in dem Durchgang zwischen dem zweiten Kühlsystem (49) und dem Heizsystem (Q5-Q5') zirkuliert, um den Temperaturgradienten zwischen der kalten Temperatur und der Reaktionstemperatur zu erzeugen.

4. Reaktor (20) nach einem der Ansprüche 1 bis 3, ferner umfassend eine Mischzone (51), in der das organische Material und ein wässriges Fluid gemischt werden, um das geladene Fluid zu bilden, wobei die Mischzone (51) stromaufwärts der Einführungsmündung (55) ist.

5. Reaktor (20) nach Anspruch 4 in Kombination mit Anspruch 2, wobei das Rührsystem (56; 54) ferner ein zweites Rührelement (54) umfasst, das in der Mischzone (51) angeordnet ist, wobei das zweite Rührelement (54) vorzugsweise integral mit dem ersten Rührelement (27) ist.

6. Reaktor (20) nach einem der Ansprüche 1 bis 5, wobei die Zirkulatoren des kalten und des warmen Kreislaufs ein Doppelzirkulator (34) gemeinsam für beide Kreisläufe ist.

7. Reaktor (20) nach einem der Ansprüche 1 bis 6, ferner umfassend einen Recyclingkreislauf der in der Behälterzone erzeugten Abflüsse, wobei dieser Recyclingkreislauf den Ausgang (Q7) der Behälterzone (26) mit einem Fluideinlass (Q4) verbindet, der sich stromaufwärts der Einführungsmündung (55) des Einführungskanals (52) befindet.

8. Reaktor (20) nach einem der Ansprüche 1 bis 7, wobei das zweite Kühlsystem (49) ein in Eiswasser betriebener Doppelmantel ist, der sich rechts neben dem Einführungskanal (52) stromabwärts der Einführmündung befindet.

9. Reaktor (20) nach einem der Ansprüche 1 bis 8, wobei der Einführungskanal (52) und das Behälterelement (23) integral und koaxial sind, wobei das Gehäuse (21) einen ersten Abschnitt (47), in dem das Behälterelement (23) untergebracht ist, und einen zweiten Abschnitt (48), in dem zumindest ein Teil des Einführungskanals (52) untergebracht ist, umfasst, wobei der erste und der zweite Abschnitt koaxial sind und der zweite Abschnitt (48) einen Querschnitt aufweist, der mindestens zweimal kleiner ist als der Querschnitt des ersten Abschnitts (47).

## Claims

1. A reactor (20) for the hydrothermal oxidation treatment of an organic material in a reaction medium, the reactor comprising:
- an enclosure (21) delimiting a cavity in which is housed a confinement member (23) defining an internal zone, called a confinement zone (26), for containing the reaction medium, and an external zone, called a peripheral zone;
- at least one oxidizing fluid inlet (Q1) for introducing an oxidizing fluid into the peripheral zone ;
- at least one first cooling system configured to cool the oxidizing fluid at the oxidizing fluid inlet (Q1) in a first portion of the peripheral zone, so as to define a cold peripheral zone (24) ;
- at least one heating system (Q5-Q5') for heating the oxidizing fluid in a second portion of the peripheral zone, prior to its introduction into the confinement zone (26), so as to define a hot peripheral zone (25); and
- at least one introduction channel (52) for the organic material into the confinement zone (26) for introducing a loaded fluid, comprising the organic material and water, said introduction channel being provided with an introduction mouthpiece (55) through which the loaded fluid is introduced into the introduction channel;
- an outlet (Q7) from the confinement zone for discharging effluents produced in the confinement zone (26) out of the enclosure (21) ;
the confinement zone (26) and the peripheral zone being in fluid communication via at least one opening (17) arranged in the end of the confinement member (23) located in the hot peripheral area (25);
the reactor being **characterized in that** it further comprises :
- a stirring system (56; 54) of the introduction channel (52) adapted to create turbulence in the fluid loaded in said introduction channel;
- at least one second cooling system (49) adapted to create, in the loaded fluid, a temperature gradient along the introduction channel (56) between a so-called cold temperature, lower than a reaction temperature prevailing in the confinement zone (26), and the reaction temperature ;
and the reactor being **characterized in that** the first cooling system (Q6-Q6') is an outer circulation cold loop having a fluid inlet (Q6') and a fluid outlet (Q6) opening into the cold peripheral zone (24), and the heating system (Q5-Q5') is an outer circulation hot loop having a fluid inlet (Q5') and a fluid outlet (Q5) opening into the hot peripheral zone (25), each circulation loop being equipped with a circulator (31 ; 32) and a heat exchanger (30; 33), and having as a coolant the oxidizing fluid circulating in the peripheral zone, an element (15) being placed in the peripheral zone to separate the cold and hot loops, while allowing the oxidizing fluid to pass from the cold peripheral zone (24) to the hot peripheral zone (25).

2. The reactor (20) according to claim 1, wherein the stirring system (56; 54) comprises a first stirring element (56) extending into the introduction channel, said first stirring element being preferably integral with a stirring system (27) of the confinement zone (26).

3. The reactor (20) according to claim 1 or claim 2, wherein the introduction channel (52) is at least partly housed in a passage for the oxidizing fluid, the oxidizing fluid circulating in said passage between the second cooling system (49) and the heating system (Q5-Q5'), so as to create the temperature gradient between the cold temperature and the reaction temperature.

4. The reactor (20) according to any one of claims 1 to 3, further comprising a mixing zone (51) in which the organic material and an aqueous fluid are mixed to form the loaded fluid, said mixing zone (51) being upstream of the introduction mouthpiece (55).

5. The reactor (20) according to claim 4, taken in combination with claim 2, wherein the stirring system (56; 54) further comprises a second stirring element (54) arranged in the mixing zone (51), the second stirring element (54) being preferentially integral with the first stirring element (27).

6. The reactor (20) according to any one of claims 1 to 5, wherein the circulators of the cold and hot loops are a double circulator (34) common to both loops.

7. The reactor (20) according to any one of claims 1 to 6, further comprising a recycling loop for the effluents produced in the confinement zone, this recycling loop connecting the outlet (Q7) of the confinement zone (26) to a fluid inlet (Q4) located upstream of the introduction mouthpiece (55) of the introduction channel (52).

8. The reactor (20) according to any one of claims 1 to 7, wherein the second cooling system (49) is a double jacket fed by chilled water, located at right angles with the introduction channel (52), downstream of the introduction mouthpiece.

9. The reactor (20) according to any one of claims 1 to 8, in which the introduction channel (52) and the confinement member (23) are integral and coaxial with each other, the enclosure (21) comprising a first portion (47), in which the confinement member (23) is housed, and a second portion (48), in which at least part of the introduction channel (52) is housed, the first and second portions being coaxial and the second portion (48) having a cross-section area at least half the cross-section area of the first portion (47).
